# EUROPEAN PATENT APPLICATION

(11) **EP 4 400 483 A1**
(43) Date of publication of application: **17.07.2024**
(21) Application number: 22864616.2
(22) Date of filing: 31.08.2022
(51) Int. Cl.: C03C 17/36, C03C 27/06, E06B 3/663

(54) **GLASS BODY**

(30) Priority: 06.09.2021 JP 2021144790
(71) Applicant: Nippon Sheet Glass Company, Limited, Tokyo 108-6321 (JP)
(72) Inventor: INAOKA Daisuke, Tokyo 108-6321 (JP); OKA Hidetoshi, Tokyo 108-6321 (JP); OSHIMA Hideaki, Tokyo 108-6321 (JP); FUJISAWA Akira, Tokyo 108-6321 (JP)
(74) Representative: HGF
(86) International application number: PCT/JP2022/032740
(87) International publication number: WO 2023/033034

(57) **Abstract**

A glass body (100) includes a first glass plate (1) having a first surface and a second surface (12) on an opposite side to the first surface. At least one plate surface of the first surface and the second surface (12) includes a radio wave transmission region (43) through which radio waves having a wavelength having linearity are allowed to be transmitted. The radio wave transmission region (43) includes a plurality of radio wave passage sections (43A) through which the radio waves are allowed to pass and which is spaced apart from each other, and a conductive film section (43B) in which a conductive film having a blocking property for the radio waves is formed between the radio wave passage sections (43A) adjacent to each other. The radio wave transmission region (43) is configured with a radio wave diffusion structure in which some of the radio waves that have passed through the plurality of radio wave passage sections (43A) are diffracted and overlap each other in a space facing the conductive film section (43B).

## Description

### Technical Field

The present invention relates to a glass body.

### Background Art

A glass body having a heat insulating property or a heat blocking property is known in which a Low-E film (low radiation film) is formed on a plate surface of a window glass of a vehicle or a building (refer to, for example, Patent Literature 1). The Low-E film has a problem in that the transmissivity is low (having a blocking property) with respect to radio waves in a frequency band of several hundreds of MHz to several tens of GHz.

Thus, in a glass body described in Patent Literature 2, an opening portion constituted by a plurality of parallel lines is provided in a Low-E film, and the ratio of the length of the plurality of lines to the area of the Low-E film is defined, whereby the radio wave transmissivity is enhanced with respect to radio waves in a frequency band of several hundreds of MHz to several tens of GHz.

In addition, a glass body described in Patent Literature 3 is provided in a first film region having the Low-E film including a plurality of discontinuous islands, and the first film region has radio wave transmissivity. In addition, Patent Literature 3 discloses an embodiment of a multilayer glass panel in which a first film region is provided on a second surface of a first glass plate, and an antenna is provided at a position facing the first film region of a fourth surface of a second glass plate.

### Citation List

### Patent Literature

Patent Literature 1: JP2000-226235 A
Patent Literature 2: WO2020/054762
Patent Literature 3: WO2021/095885

### Summary of Invention

### Technical Problem

Radio waves of 700 MHz to 30 GHz included in a frequency band used in the fourth generation mobile communication system (hereinafter, referred to as "4G") and the fifth generation mobile communication system (hereinafter, referred to as "5G") have a higher linearity compared to radio waves having a lower frequency band, and the opening portion described in Patent Literature 2 and the first film region described in Patent Literature 3 are set to have a shape that guarantees the linearity of the radio waves. In particular, in the opening portion described in Patent Literature 2 the plurality of parallel lines is provided on the Low-E film. Therefore, the opening portion is likely to be visually recognized as a striped pattern, which has a large influence on the appearance. In addition, since 4G and 5G have high linearity, there is a problem in that, on the indoor side, the radio waves coming from an outdoor base station are likely to be weak except for a space facing the opening portion, and it is difficult to receive the radio waves. For this reason, it is necessary to improve the communication environment for the radio waves having high linearity, on the indoor side.

Thus, a glass body having radio wave transmissivity, which is capable of expanding a reception area, is desired.

### Solution to Problem

A characteristic configuration of a glass body according to the present invention comprises a first glass plate configured to have a first surface and a second surface on an opposite side to the first surface. At least one plate surface of the first surface and the second surface includes a radio wave transmission region through which radio waves having a wavelength having linearity are allowed to be transmitted. The radio wave transmission region includes a plurality of radio wave passage sections through which the radio waves are allowed to pass and which is spaced apart from each other, and a conductive film section in which a conductive film having a blocking property for the radio waves is formed between the radio wave passage sections adjacent to each other. The radio wave transmission region is configured with a radio wave diffusion structure in which some of the radio waves that have passed through the plurality of radio wave passage sections are diffracted and overlap each other in a space facing the conductive film section.

As described above, for example, the radio waves of 700 MHz to 3.5 GHz, which is a 4G frequency band, and the radio waves of 3.6 GHz to 30 GHz, which is a 5G frequency band, have high linearity, and the radio waves passing through the glass body have an increased radio wave intensity in a range facing the region of the first glass plate without the conductive film. On the other hand, in order to increase the radio wave reception area, it is sufficient that the conductive film is not provided on the glass body. However, in that case, the heat insulating property and the heat blocking property (hereinafter, referred to as "heat insulating performance") are lost, and the heat insulating performance and the radio wave transmissivity are in a trade-off relationship.

In the glass body of the present configuration, the plurality of radio wave passage sections through which radio waves are allowed to pass and which is spaced apart from each other is provided in the radio wave transmission region, and the conductive film section is provided between the radio wave passage sections adjacent to each other. That is, even in the radio wave transmission region, the conductive film section is provided to enhance the heat insulating performance and the plurality of radio wave passage sections is provided to enhance the radio wave transmissivity.

Moreover, the radio wave transmission region of the present configuration is configured with a radio wave diffusion structure in which some of the radio waves that have passed through the plurality of radio wave passage sections are diffracted and overlap each other in a space facing the conductive film section. That is, the radio waves that have passed through the radio wave passage section not only travel straight but also are diffracted, and the radio wave diffraction components overlap each other in the space facing the conductive film section. Accordingly, in the space facing the conductive film section, where the radio wave intensity is likely to be weakened, the radio wave intensity is capable of being enhanced, and the radio wave reception area is capable of being increased. In this way, the glass body having radio wave transmissivity, which is capable of expanding the reception area, is obtained.

As another characteristic configuration, a maximum length of a line segment passing through a center of the radio wave passage section is four times or less that of the wavelength.

For example, the knowledge was obtained in which, if the radio wave passage section has a rectangular shape and a length of one side is 100 mm, radio wave diffraction components having a wavelength of 25 mm or more (frequency band is about 12 GHz or less) increase. As in the present configuration, if the maximum length of the line segment passing through the center of the radio wave passage section is set to four times or less the wavelength, it is possible to determine the dimensions of the radio wave passage section capable of increasing the radio wave intensity in a wide reception area according to a frequency band to be used.

As another characteristic configuration, a width of the conductive film section, which is a shortest distance between the radio wave passage sections adjacent to each other, is 10 mm or more and 500 mm or less.

As in the present configuration, if the width of the conductive film section, which is the shortest distance between the radio wave passage sections adjacent to each other, is 10 mm or more and 500 mm or less, it is possible to make both the heat insulating performance and the radio wave transmissivity compatible with each other. In a case where the width of the conductive film section is smaller than 10 mm, the radio wave blocking property due to the conductive film section deteriorates, and the entire radio wave transmission region has an integral radio wave transmissivity. Therefore, in a case where the radio wave diffraction components decrease and the width of the conductive film section is larger than 500 mm, a dead space with no overlap of the radio waves is likely to be generated in the vicinity of the first glass plate.

As another characteristic configuration, the at least one plate surface includes a radio wave non-transmission region in which the conductive film is formed around the radio wave transmission region, and the radio wave passage section is formed with a pattern having a plurality of islands covered with the conductive films spaced apart from each other.

As in the present configuration, if the pattern having the plurality of islands spaced covered with the conductive films apart from each other is formed in the radio wave passage section, the influence on the appearance is capable of being reduced between the radio wave non-transmission region and the radio wave transmission region.

As another characteristic configuration, a fine wire having a wire width of 1 µm or more and 100 µm or less is formed between the islands adjacent to each other, and an interval between the fine wires adjacent to each other is 200 µm or more and 10 mm or less.

As in the present configuration, if the fine wire having a wire width of 1 µm or more and 100 µm or less is formed between the islands adjacent to each other, and the interval between the fine wires adjacent to each other is 200 µm or more and 10 mm or less, the influence on the appearance is capable of being reduced while guaranteeing the radio wave transmissivity. In addition, if the wire width of the fine wire is smaller than 1 µm, it is difficult to insulate the island and the island adjacent to each other. Thus, it is difficult to secure the radio wave transmissivity. If the wire width is larger than 100 µm, the heat insulating performance is likely to deteriorate. In addition, if the interval between the fine wires adjacent to each other is smaller than 200 µm, the heat insulating performance deteriorates, and if the interval is larger than 10 mm, the radio wave transmissivity is likely to deteriorate.

As another characteristic configuration, the islands are rectangular.

If the islands are rectangular as in the present configuration, the patterning processing is easy.

As another characteristic configuration, the wavelength is 10 mm or more and 428 mm or less.

As in the present configuration, if the wavelength is 10 mm or more and 428 mm or less (the frequency band is 700 MHz or more and 30 GHz or less), the linearity is particularly high. Therefore, usefulness is capable of being enhanced by adopting the glass body of the above configuration.

As another characteristic configuration, the conductive film is a Low-E film.

If the conductive film is a Low-E film as in the present configuration, it is possible to guarantee the radio wave transmissivity capable of expanding the reception area while enhancing the heat insulating performance.

As another characteristic configuration, the glass body further comprises a second glass plate configured to have a third surface facing the second surface and a fourth surface on an opposite side to the third surface; and a spacer configured to be in contact with the second surface and the third surface and to form a void layer between the first glass plate and the second glass plate. The radio wave transmission region is formed on the second surface or the third surface.

In the multilayer glass as in the present configuration, if the Low-E film is disposed on the second surface of the first glass plate or the third surface of the second glass plate, the heat insulating performance is enhanced. In the glass body having enhanced heat insulating performance, if the radio wave transmission region is formed on the second surface or the third surface, the usefulness is capable of being enhanced by adopting the glass body having the above configuration.

### Brief Description of Drawings

Fig. 1 is a conceptual view of a structure provided with a glass body in the present embodiment;
Fig. 2 is a side sectional view of the glass body in a first embodiment;
Fig. 3 is a side sectional view of a glass body in a second embodiment;
Fig. 4 is a front view of the glass body having a radio wave transmission region in the present embodiment;
Fig. 5 is a view illustrating simulation results of radio waves passing through an opening in a comparative example;
Fig. 6 is a view illustrating simulation results of radio waves passing through a radio wave transmission region in the present example;
Fig. 7 is a view illustrating simulation results of radio waves passing through the radio wave transmission region in the present example;
Fig. 8 is a view illustrating simulation results of radio waves passing through the radio wave transmission region in the present example;
Fig. 9 is a view illustrating the spread of radio waves passing through an opening in Comparative Example 1;
Fig. 10 is a view illustrating the spread of radio waves passing through an opening in Comparative Example 2;
Fig. 11 is a view illustrating the spread of radio waves passing through an opening in Comparative Example 3;
Fig. 12 is a view illustrating the spread of radio waves passing through the radio wave transmission region in the present example;
Fig. 13 is a view illustrating the spread of radio waves passing through the opening in a case where a plurality of glass bodies of Comparative Example 3 is disposed side by side in a plate surface direction;
Fig. 14 is a view illustrating the spread of radio waves passing through the radio wave transmission region in a case where a plurality of the glass bodies in the present example are disposed side by side in the plate surface direction; and
Fig. 15 is an enlarged front view of a glass body having a radio wave transmission region in other embodiments.

### Description of Embodiments

Hereinafter, embodiments of a glass body according to the present invention will be described with reference to the drawings. However, the present invention is not limited to the following embodiments, and it is possible to make various modifications without departing from the spirit of the embodiment.

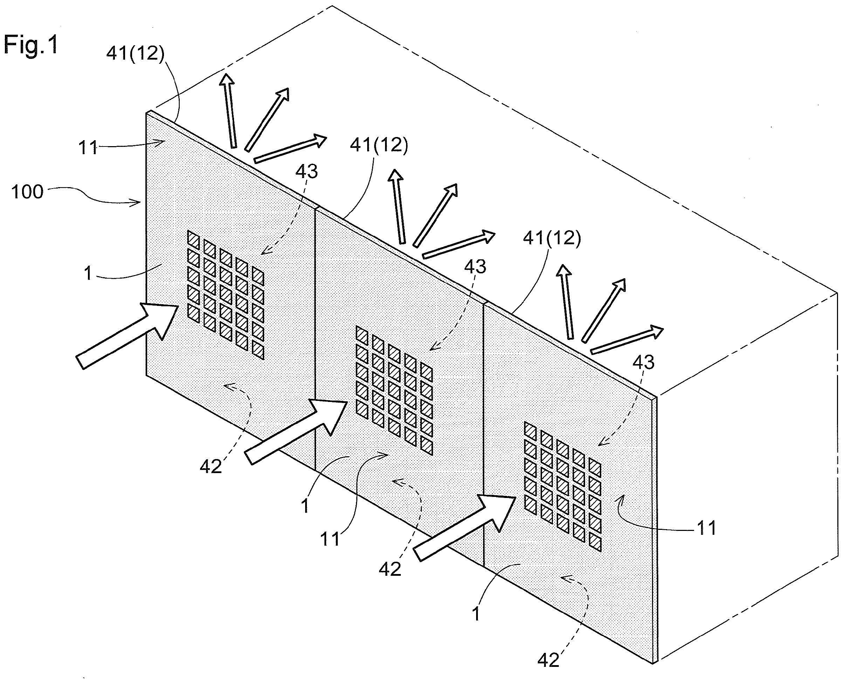

The glass body 100 in the present embodiment is capable of being used for various purposes and is capable of being used, for example, as a window glass of a building or a window glass of a moving body such as an automobile, an aircraft, a ship, or a train. Fig. 1 illustrates a schematic view in which the glass body 100 is used for a window glass of a building. The glass body 100 may be a window glass that comes into contact with the outside air or may be a window glass that partitions a room.

As illustrated in Fig. 1, the glass body 100 includes a first glass plate 1 having a rectangular outer shape on a plate surface. The glass body 100 includes a radio wave transmission region 43 through which radio waves corresponding to a full or partial band of 700 MHz to 3.5 GHz (wavelength of 428 mm to 85 mm), which is a 4G frequency band having linearity, or a 5G frequency band of 3.6 GHz to 30 GHz (wavelength 83 mm to 10 mm) are allowed to be transmitted, and a radio wave non-transmission region 42 in which a Low-E film 41 (an example of a conductive film) is formed around the radio wave transmission region 43. The radio wave transmission region 43 in the present embodiment has a radio wave diffusion structure in which some of radio waves are diffracted to expand a radio wave reception area. Details of the radio wave transmission region 43 will be described below.

The material of the first glass plate 1 (the same applies to the second glass plate 2 to be described below) is not particularly limited, and a known glass plate is capable of being used. For example, various glass plates such as heat ray absorbing glass, clear glass, green glass, UV green glass, and soda lime glass are capable of being used. The thickness of the first glass plate 1 is not particularly limited, but is, for example, preferably 2 to 15 mm, and more preferably 2.5 to 8 mm.

### <First embodiment: single plate glass>

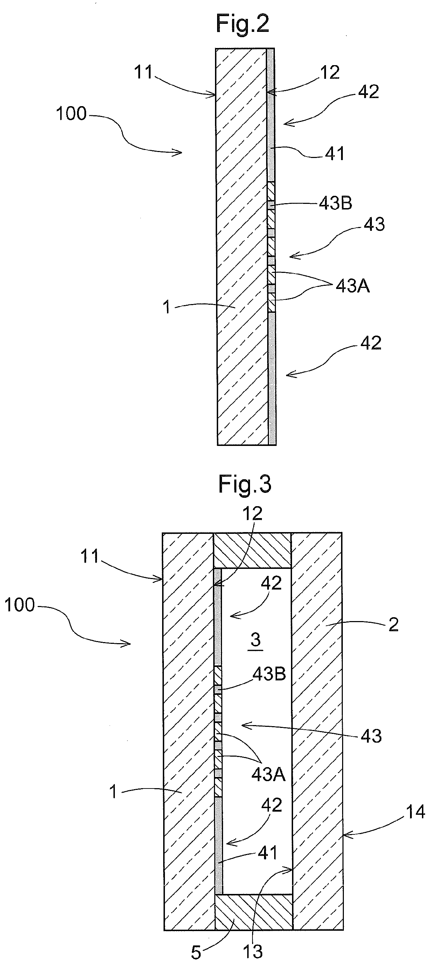

As illustrated in Fig. 2, the first glass plate 1 has a first surface 11 and a second surface 12 on the opposite side to the first surface 11. The Low-E film 41 (an example of the conductive film) having a radio wave blocking property is formed on the second surface 12 of the first glass plate 1. The Low-E film 41 is a conductive thin film having the radio wave blocking property. The surface resistivity of the conductive thin film is preferably less than 20 Ω. By doing this way, the Low-E film 41 has a high reflectivity in a wavelength range from an infrared region to a radio wave range (frequency band of several hundreds of MHz to several tens of GHz). For that reason, the plate surface of the first glass plate 1 on which the Low-E film 41 is formed has a low radio wave transmissivity but also has a low emissivity. The second surface 12 of the first glass plate 1 has the radio wave non-transmission region 42 in which the Low-E film 41 is formed on the entire region. In addition, a part (central portion in the drawing) of the second surface 12, which is the plate surface on which the Low-E film 41 is formed, is provided with the radio wave transmission region 43 in which a part of the Low-E film 41 is removed by the laser processing or the like. The radio wave transmission region 43 is disposed to be capable of transmitting radio waves corresponding to a full or partial band of 700 MHz to 3.5 GHz (wavelength of 428 mm to 85 mm), which is a 4G frequency band having linearity, and a 5G frequency band of 3.6 GHz to 30 GHz (wavelength of 83 mm to 10 mm). The radio wave non-transmission region 42 and the radio wave transmission region 43 may be provided on the first surface 11 of the first glass plate 1.

### <Second embodiment: multilayer glass>

As illustrated in Fig. 3, the glass body 100 is a multilayer glass having two glass plates, that is, a first glass plate 1 and a second glass plate 2 of which the plate surfaces have substantially the same rectangular outer shape. The pair of glass plates 1 and 2 is coupled to each other by a spacer 5 disposed on peripheral edge portions thereof. A void layer 3 is formed between the pair of glass plates 1 and 2 by the spacer 5. The first glass plate 1 has the first surface 11 which is a plate surface on the outdoor side, and a second surface 12 which is a plate surface on the void layer 3 side on the opposite side to the first surface 11. The second glass plate 2 has a third surface 13 which is a plate surface on the void layer 3 side and a fourth surface 14 which is a plate surface on the indoor side on the opposite side to the third surface 13. That is, the spacer 5 is in contact with the second surface 12 and the third surface 13. The Low-E film 41 (an example of the conductive film) having a radio wave blocking property is formed on a plate surface (second surface 12) on the void layer 3 side. Although illustration is omitted, the void layer 3 is sealed by a frame in which a sealing material disposed outside the spacer 5 is disposed.

The second surface 12 of the first glass plate 1 has the radio wave non-transmission region 42 in which the Low-E film 41 is formed on the entire region. In addition, the second surface 12, which is the plate surface on which the Low-E film 41 is formed, is provided with the radio wave transmission region 43 in which a part of the Low-E film 41 is removed by the laser processing or the like. The radio wave transmission region 43 is disposed to be capable of transmitting radio waves corresponding to a full or partial band of 700 MHz to 3.5 GHz (wavelength of 428 mm to 85 mm), which is a 4G frequency band having linearity, and a 5G frequency band of 3.6 GHz to 30 GHz (wavelength of 83 mm to 10 mm). In the multilayer glass as in the present embodiment, if the Low-E film 41 is disposed on the second surface 12 of the first glass plate 1 or the third surface 13 of the second glass plate 2, the heat insulating performance is enhanced. In addition, the radio wave non-transmission region 42 and the radio wave transmission region 43 may be provided on the first surface 11 of the first glass plate 1 or the fourth surface 14 of the second glass plate 2. In addition, an antenna for transmitting and receiving radio waves (not illustrated) may be installed on a plate surface (fourth surface 14) on the indoor side of the glass body 100, or the antenna may be installed on a ceiling or the like in the room.

### <Low-E film>

The Low-E film 41 is not particularly limited as long as the Low-E film does not impair the object of the present invention but is preferably a multilayer film including a layer having silver as a main component. In addition, the Low-E film 41 is preferably formed of a multilayer in which two or more types of layers selected from a metal layer, a metal oxide layer, a metal nitride layer, and a metal oxynitride layer are laminated. A suitable example of the metal layer includes a silver layer. Suitable examples of the metal oxide layer include a tin oxide layer, a titanium oxide layer, or a zinc oxide layer. A suitable example of the metal nitride layer includes silicon nitride. A suitable example of the metal oxynitride layer includes silicon oxynitride. The Low-E film 41 is preferably formed by a vacuum film forming method such as a physical gas phase growth method (PVD) or the like, and particularly film formation using a sputtering method is preferable because a film is capable of being uniformly formed over a large area. The radio wave transmission region 43 is formed, for example, by forming the Low-E film 41 on a glass plate by the sputtering method and then removing the Low-E film 41 by the laser processing or the like. The radio wave transmission region 43 may be formed by using various masking materials. By forming the radio wave transmission region 43 by such a method, the radio wave transmission region 43 is capable of being easily disposed at a desired position of the glass plate.

In addition, the Low-E film 41 is more preferably formed of a multilayer obtained by laminating three or more types of layers selected from a tin oxide layer, a silicon nitride layer, a silicon oxynitride layer, a titanium oxide layer, a zinc oxide layer, and a silver layer, and is most preferably formed of three layers or five layers in which (1) the tin oxide layer (first anti-reflection layer), the zinc oxide layer (first anti-reflection layer), the silver layer (metal layer), the zinc oxide layer (second anti-reflection layer), and the tin oxide layer (second anti-reflection layer) or (2) the silicon nitride layer (first anti-reflection layer), the zinc oxide layer (first anti-reflection layer), the silver layer (metal layer), and the zinc oxide layer (second anti-reflection layer) are laminated sequentially from a glass plate surface.

The Low-E film 41 contains a metal layer having silver as a main component. The film thickness of the metal layer is preferably 5 nm or more and 20 nm or less, and more preferably 10 nm or more and 15 nm or less. The Low-E film 41 has a metal layer having a predetermined film thickness having silver as a main component, whereby heat radiation is capable of being suppressed. Accordingly, the glass body 100 is capable of improving the heat insulating performance. In addition, by setting the film thickness of the metal layer to 15 nm or less, the influence on the appearance by the Low-E film 41 is capable of being reduced.

The Low-E film 41 has the first anti-reflection layer on a side close to the plate surface on which the Low-E film 41 is formed, which is the inside of the metal layer, and the total optical film thickness of the first anti-reflection layer is suitably 20 nm or more and 120 nm or less. The Low-E film 41 has the second anti-reflection layer on a side far from the plate surface on which the Low-E film 41 is formed, which is the outside of the metal layer, and the total optical film thickness of the second anti-reflection layer is suitably 60 nm or more and 120 nm or less. The optical film thickness is capable of being calculated by (Refractive index n) × (Film thickness d). In a case where the first anti-reflection layer (second anti-reflection layer) is constituted by a plurality of films, the total optical film thickness calculated for each film is the optical film thickness of the first anti-reflection layer (second anti-reflection layer). In calculating the optical film thickness, the value of the refractive index fluctuates depending on the wavelength of visible light. Here, the optical film thickness is based on a refractive index in a case where the wavelength of visible light is a reference wavelength (550 nm) in a general visible region.

As described above, in the Low-E film 41, the first anti-reflection layer having a predetermined film thickness is present on the side close to the second surface 12 of the first glass plate 1 with reference to the metal layer. Accordingly, the metal layer is protected and the Low-E film 41 has low reflection performance. As a result, heat is capable of being reliably blocked. In addition, the glass body 100 is capable of realizing high visible light transmittance and suitable reflection color tone.

In addition, in the Low-E film 41, even in a case where the second anti-reflection layer having a predetermined film thickness is present on the side far from the second surface 12 of the first glass plate 1 with reference to the metal layer, the metal layer is protected and the Low-E film 41 has low reflection performance. As a result, heat is capable of being reliably blocked. In addition, the glass body 100 is capable of realizing high visible light transmittance and suitable reflection color tone.

### <Radio wave transmission region>

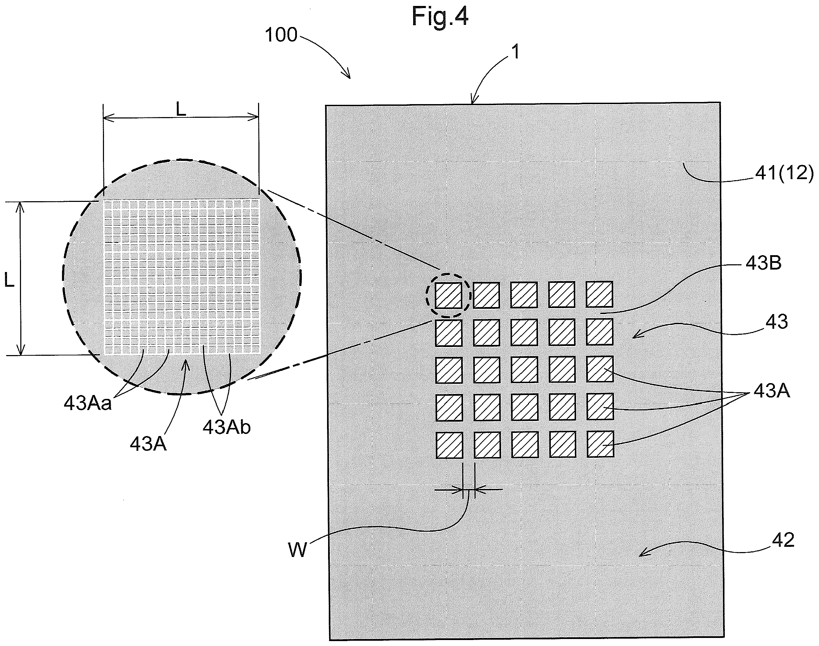

As illustrated in Fig. 4, the radio wave non-transmission region 42 in the present embodiment is a region in which the Low-E film 41 is formed around the radio wave transmission region 43, and the radio wave transmission region 43 has a radio wave diffusion structure in which some of radio waves are diffracted to expand a radio wave reception area. The radio wave transmission region 43 includes a plurality of radio wave passage sections 43A (25 pieces of 5 × 5 in the present embodiment) through which radio waves having a wavelength (10 mm to 500 mm) having linearity are allowed to pass and which is spaced apart from each other, and a conductive film section 43B in which the Low-E film 41 having the radio wave blocking property is formed between the radio wave passage sections 43A adjacent to each other. The radio wave transmission region 43 is configured with a radio wave diffusion structure in which some of the radio waves that have passed through the plurality of radio wave passage sections 43A are diffracted and overlap each other in a space facing the conductive film section 43B.

The radio wave passage section 43A in the present embodiment is formed in a rectangular shape, and the longest side of the four sides is four times or less that of the wavelength of the radio waves (10 mm to 500 mm, hereinafter simply referred to as "wavelength") to pass. In other words, a maximum length L (electric field vibration direction of radio waves that become polarized waves) of the line segment passing through the center of the radio wave passage section 43A is four times or less the wavelength. In this way, if the maximum length L of the line segment passing through the center of the radio wave passage section 43A is set to four times or less the wavelength, it is possible to determine the dimensions of the radio wave passage section 43A capable of increasing the radio wave intensity in a wide reception area according to a frequency band to be used. On the other hand, for radio waves corresponding to the 5G frequency band of 30 GHz to 300 GHz (a wavelength of less than 11 mm), it is difficult to process the radio wave passage section 43A. Therefore, the radio wave diffusion structure according to the present embodiment is not preferable. The wavelength of radio waves to pass may be set to 10 mm or more or may be limited to a 5G (sub6 band) wavelength of 49 mm or more (frequency band of 6 GHz or less). In the present embodiment, since the radio wave passage section 43A is square, all four sides are equal to the maximum length L of the line segment passing through the center of the radio wave passage section 43A. However, in a case where the radio wave passage section is rectangular, two longest sides of the four sides are equal to the maximum length L of the line segment passing through the center of the radio wave passage section 43A.

In addition, the maximum length L of the line segment passing through the center of the radio wave passage section 43A is preferably 10 mm or more, preferably 4 times or less of the wavelength, and more preferably 20 mm or more and 2 times or less of the wavelength. If the maximum length L of the line segment passing through the center of the radio wave passage section 43A is less than 10 mm, patterning processing to be described below is difficult, and if the maximum length exceeds four times the wavelength, radio wave diffraction components decrease, and it is difficult to increase the radio wave intensity in a wide reception area.

The width W of the conductive film section 43B, which is the shortest distance between the radio wave passage sections 43A adjacent to each other, is preferably 10 mm or more and 500 mm or less, and more preferably 10 mm or more and 100 mm or less. In this way, if the width W of the conductive film section 43B, which is the shortest distance between the radio wave passage sections 43A adjacent to each other, is 10 mm or more and 500 mm or less, it is possible to make both the heat insulating performance and the radio wave transmissivity compatible with each other. In a case where the width W of the conductive film section 43B is smaller than 10 mm, the radio wave blocking property due to the conductive film section 43B deteriorates, and the entire radio wave transmission region 43 has an integral radio wave transmissivity. Therefore, in a case where the radio wave diffraction components decrease and the width W of the conductive film section 43B is larger than 500 mm, a dead space with no overlap of the radio waves is likely to be generated in the vicinity of the first glass plate 1.

Each of the radio wave passage sections 43A is formed with a pattern having a plurality of islands 43Aa covered with the Low-E films 41 that are spaced apart from each other. In the radio wave passage section 43A, fine wires 43Ab are formed between the islands 43Aa adjacent to each other, for example, by forming the Low-E film 41 on a glass plate by the sputtering method and then removing only the Low-E film 41 by the laser processing or the like.

If the fine wires 43Ab are formed in this way, the glass plate is not scratched and the fine wires 43Ab are capable of being made inconspicuous. The plurality of islands 43Aa in the present embodiment is formed in a symmetrical shape in which the islands are spaced apart from each other at equal intervals via the fine wires 43Ab having the same wire width.

The wire width of the fine wires 43Ab is preferably 1 µm or more to 100 µm or less, and more preferably 5 µm or more to 30 µm or less. If the wire width of the fine wires 43Ab is smaller than 1 µm, the integral Low-E film 41 is obtained. As a result, it is difficult to insulate the island 43Aa and the island 43Aa adjacent to each other. Therefore, it is difficult to secure the radio wave transmissivity. If the wire width is larger than 100 µm, the heat insulating performance is likely to deteriorate.

The interval between the fine wires 43Ab adjacent to each other (distance between the wire centers of the fine wires 43Ab adjacent to each other) is preferably 200 µm or more and 10 mm or less, and more preferably 500 µm or more and 3 mm or less. In addition, if the interval between the fine wires 43Ab adjacent to each other is smaller than 200 µm, the heat insulating performance deteriorates, and if the interval is larger than 10 mm, the radio wave transmissivity is likely to deteriorate. The upper limit value of the interval between the fine wires 43Ab adjacent to each other is preferably 1/3 or less of the wavelength.

### <Evaluation test>

### (Test conditions)

Soda lime glass in which the thickness of the first glass plate 1 is 6 mm was used, and the Low-E film 41 covering the second surface 12 had a total film thickness of 80 nm and an emissivity of 0.1 with SnO2/ZnO/Ag/SUS/ZNO/SnO2 from the second surface 12 side of the first glass plate 1. The laser processing conditions for removing the Low-E film 41 were such that a repetition frequency of 100 kHz, a wavelength of 355 nm, and an operation speed of 300 mm/sec were set by using a YAG:Nd laser so that only the Low-E film 41 was capable of being removed without removing the glass.

### (Emissivity)

The emissivity was measured according to JIS-R3106 by using a Fourier transform infrared spectrophotometer (Frontier Gold manufactured by Perkin Elmer). Table 1 shows the emissivity of the radio wave passage section 43A in a case where the number and size of the radio wave passage sections 43A and the wire width and the interval of the fine wires 43Ab were changed. The radio wave passage sections 43A and the islands 43Aa were all formed in a square shape, and the width of the conductive film section 43B, which is the shortest distance between the radio wave passage sections 43A adjacent to each other, was set to 50 mm.

**[Table 1]**

| Test No. | Number of radio wave passage sections | Size of radio wave passage section | Wire width of fine wire | Interval between fine wires | Emissivity of radio wave passage section |
|---|---|---|---|---|---|
| (1) | 1 piece | 100 cm² | 10 µm | 900 µm | 0.12 |
| (2) | 1 piece | 2500 cm² | 10 µm | 900 µm | 0.12 |
| (3) | 5 × 5 pieces | 2500 cm² | 120 µm | 900 µm | 0.27 |
| (4) | 5 × 5 pieces | 2500 cm² | 10 µm | 900 µm | 0.12 |
| (5) | 5 × 5 pieces | 2500 cm² | 20 µm | 900 µm | 0.13 |
| (6) | 5 × 5 pieces | 2500 cm² | 20 µm | 2500 µm | 0.12 |

As shown in Test Number (3) of Table 1, it can be understood that, if the wire width of the fine wires 43Ab is larger than 100 µm, the emissivity of the radio wave passage section 43A remarkably deteriorates and the heat insulating performance deteriorates. In addition, as shown in Test Numbers (1), (2), (4), (5), and (6), it can be understood that, regardless of the number or size of the radio wave passage sections 43A, if the wire width of the fine wires 43Ab is set to 100 µm or less and the interval between the fine wires 43Ab is 200 µm or more, deterioration of the emissivity is suppressed and the heat insulating performance is maintained, compared to a case where the entire plate surface of the first glass plate 1 is covered with the Low-E film 41.

### (Radio wave transmission characteristics)

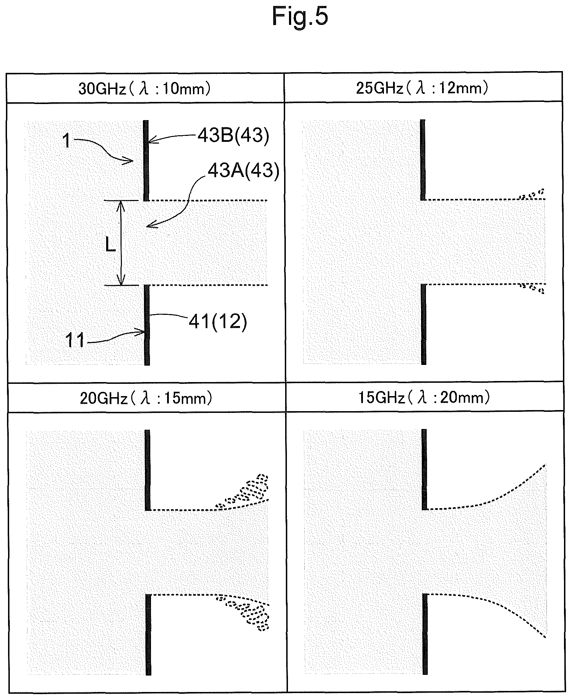

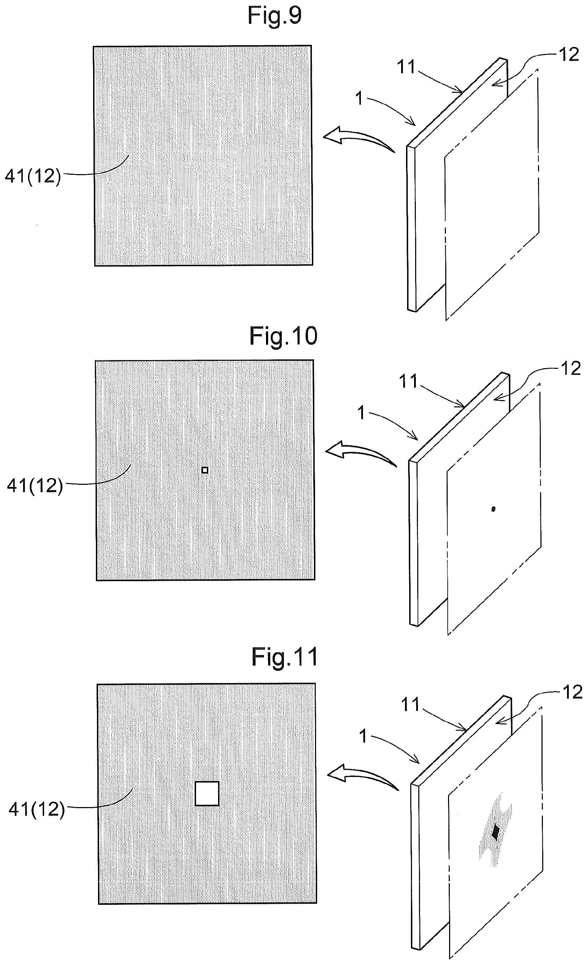

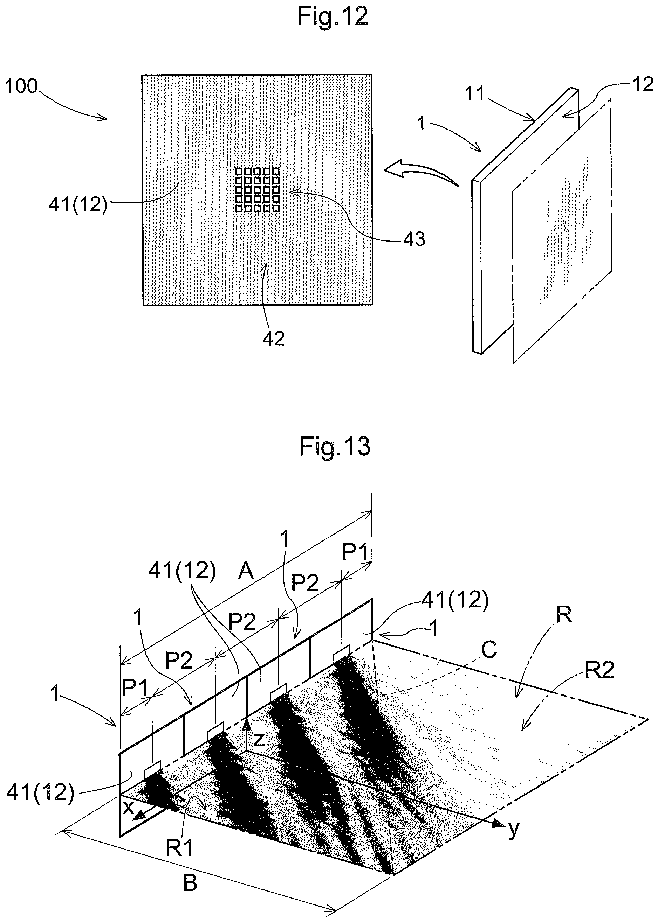

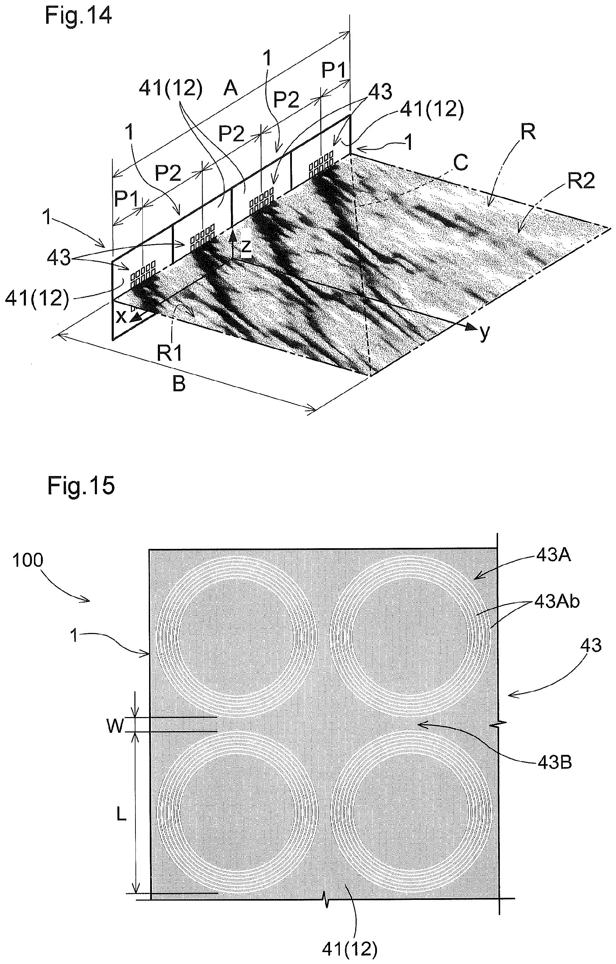

Subsequently, simulation results proving that the radio wave transmission region 43 of the glass body 100 in the present embodiment has a radio wave diffusion structure in which some of radio waves are diffracted to expand a radio wave reception area will be described. Figs. 5 to 14 illustrate simulation results in which the radio wave transmission characteristics of the glass body 100 according to the present embodiment and glass bodies according to comparative examples were confirmed. In addition, Figs. 5 to 8 illustrate using Micro-Stripes2 high-frequency electromagnetic field simulators, and Figs. 9 to 14 illustrate using Altair Feko high-frequency electromagnetic field simulators. In addition, Figs. 5 to 12 illustrate perpendicular incidence in which radio waves were perpendicularly incident on the first surface 11 of the first glass plate 1, and Figs. 13 and 14 illustrate oblique incidence in which radio waves were obliquely incident on the first surface 11 of the first glass plate 1.

Figs. 5 to 8 illustrate simulation results seen from a plan view (upper side of an opening) having a 100 mm × 100 mm opening (maximum length L of the line segment passing through the center is 100 mm), as the radio wave passage section 43A of the radio wave transmission region 43. A simulation of irradiating the radio wave passage section 43A with radio waves of 30 GHz to 1 GHz (wavelength of 10 mm to 300 mm) was performed. A region surrounded by a broken line in each drawing indicates the distribution of strong radio waves (radio wave transmission loss 10 dB or less when incident radio waves are 0 dB).

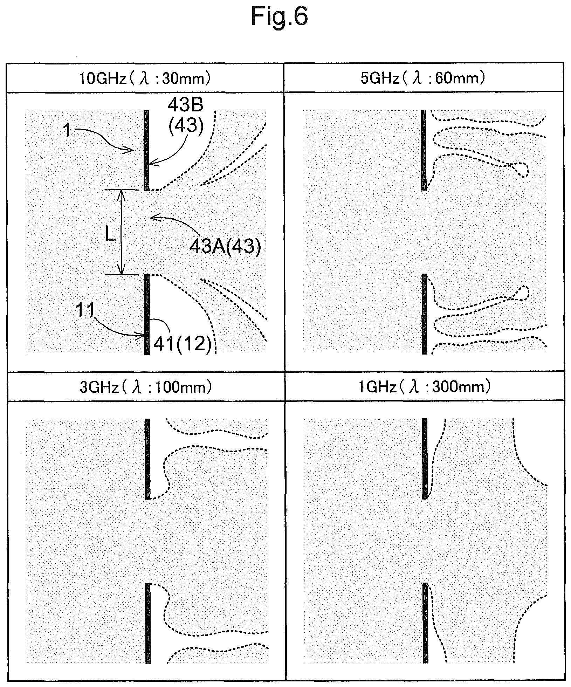

As illustrated in Fig. 5 as a comparative example, it can be seen that in a frequency band of 30 GHz to 15 GHz (wavelength of 10 mm to 20 mm), which is a relatively high frequency band, most of the radio waves that have passed through the radio wave passage section 43A travel straight without being diffracted. On the other hand, as illustrated in Fig. 6 as the present example, it can be seen that, in a relatively low frequency band of 10 GHz to 1 GHz (wavelength of 30 mm to 300 mm), the radio waves that have passed through the radio wave passage section 43A are diffracted to spread to a space facing the conductive film section 43B.

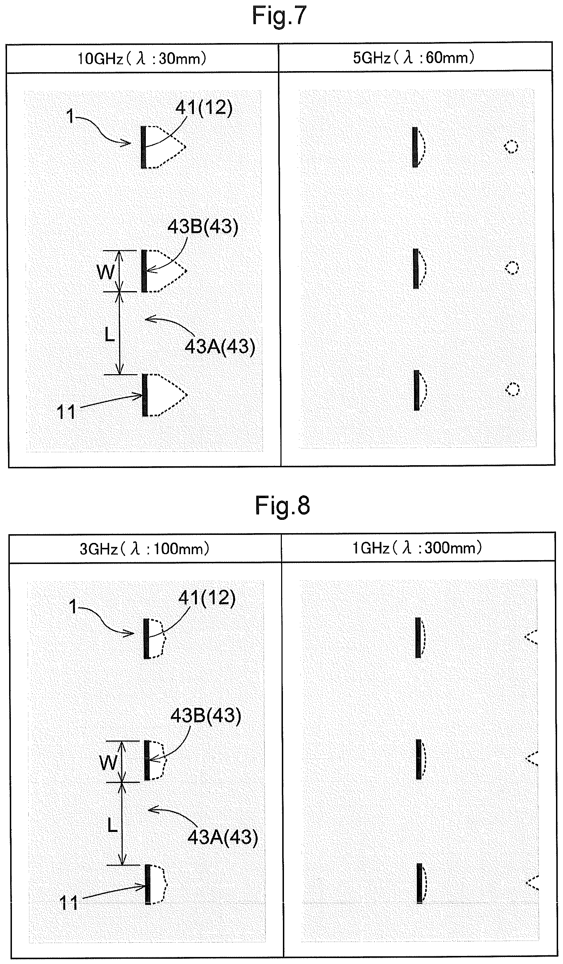

Figs. 7 to 8 illustrate an overlap situation of the radio waves that passed through the radio wave passage sections 43A adjacent to each other when the width W of the conductive film section 43B was set to 50 mm. As illustrated in Fig. 7, it can be understood that, in a frequency band of 5 GHz (wavelength of 60 mm), a wide overlap is provided in the space facing the conductive film section 43B, and in a frequency band of 10 GHz (wavelength of 30 mm), the degree of overlap decreases slightly, but the radio wave transmission region 43 is configured with a radio wave diffusion structure in which some of the radio waves that have passed through the plurality of radio wave passage sections 43A are diffracted and overlap each other in the space facing the conductive film section 43B. As illustrated in Fig. 8, in a low frequency band of 3 GHz to 1 GHz (wavelength of 100 mm to 300 mm), a wide overlap is provided in the space facing the conductive film section 43B. It can be seen from this that it is preferable that the wavelength (30 mm to 300 mm) of the radio waves is larger than 1/4 with respect to the opening length 100 mm (maximum length L of the line segment passing through the center). In other words, the maximum length L of the line segment passing through the center of the radio wave passage section 43A is preferably 4 times or less the wavelength. It is more preferable that the wavelength (60 mm to 300 mm) of the radio waves is larger than 1/2 of the opening length 100 mm (maximum length L of the line segment passing through the center). In this case, the maximum length L of the line segment passing through the center of the radio wave passage section 43A is twice or less the wavelength.

Figs. 9 to 12 illustrate simulation results of the spread of radio waves in a space (two-dot chain line) on which radio waves having a frequency band of 3.5 GHz (wavelength of 86 mm) were made to be perpendicularly incident from the first surface 11 side of the first glass plate 1 and which was spaced apart by 1 m in parallel from the second surface 12 of the first glass plate 1. Fig. 9 illustrates Comparative Example 1 in which the entire second surface 12 of the first glass plate 1 was covered with the Low-E film 41, Fig. 10 illustrates Comparative Example 2, having one opening of 100 mm × 100 mm formed by removing the Low-E film 41 at the center of the second surface 12 of the first glass plate 1, Fig. 11 illustrates Comparative Example 3, having one opening of 500 mm × 500 mm formed by removing the Low-E film 41 at the center of the second surface 12 of the first glass plate 1. Fig. 12 illustrates that, as in the glass body 100 according to the above-described embodiment, the present example in which 5 × 5 radio wave passage sections 43A each having 100 mm × 100 mm are disposed side by side and the radio wave transmission region 43 having a total of 500 mm × 500 mm is formed on the center of the second surface 12 of the first glass plate 1.

In Comparative Example 1 illustrated in Fig. 9, the radio waves were blocked, and the radio wave transmission loss was 30 dB or more. Therefore, the radio waves were capable of being hardly received on the second surface 12 side of the first glass plate 1. In Comparative Example 2 illustrated in Fig. 10, only radio waves traveled straight through the opening, and there was no spread of radio waves at all. In Comparative Example 3 illustrated in Fig. 11, the opening length was 500 mm, which was four times or more that of a radio wave wavelength of 86 mm. Therefore, there was almost no spread of radio waves. On the other hand, in the present example illustrated in Fig. 12, the radio wave transmission loss expanded to a range of 3 dB or more and 15 dB or less, and the radio wave intensity slightly decreased, but the radio wave reception area was capable of being expanded.

Figs. 13 and 14 illustrate simulation results of the spread of radio waves in a case where four first glass plates 1 are disposed side by side in the plate surface direction. Specifically, Figs. 13 and 14 illustrate a spread of radio waves in a region R (two-dot chain line) on which radio waves having a frequency band of 3.5 GHz (wavelength of 86 mm) are made to be obliquely incident at an incidence angle of 45 degrees to the right from the first surface 11 side of each of the first glass plates 1 toward the second surface 12 and which is formed in a horizontal direction along an xy plane. The region R is a rectangular region formed by a first side portion A in which the four first glass plates 1 are disposed side by side and a second side portion B perpendicular to the first side portion A. In Figs. 13 and 14, the length of the first side portion A is set to 7,800 mm, and the length of the second side portion B is set to 5,500 mm. In the plurality of openings (radio wave transmission regions 43) along the first side portion A, a distance P1 from both ends of the first side portion A to the openings is set to 900 mm, and a distance P2 between adjacent openings is set to 1800 mm. In Fig. 13, the glass body of Comparative Example 3 which has one 500 mm × 500 mm opening formed by removing the Low-E film 41 at the center of the second surface 12 is used as the first glass plate 1. In Fig. 14, as in the glass body 100 according to the above-described embodiment, the glass body of the present example in which 5 × 5 radio wave passage sections 43A each having 100 mm × 100 mm are disposed side by side and the radio wave transmission region 43 having a total of 500 mm × 500 mm is formed on the center of the second surface 12 of the first glass plate 1 is used as the first glass plate 1.

In Fig. 13 where the glass body of Comparative Example 3 is used, since all the radio waves that have passed through the openings of the first glass plate 1 have a small spread in the horizontal direction, the radio waves reach only about half of the region R. On the other hand, in Fig. 14 in which the glass body of the present example is used, since all the radio waves that have passed through the radio wave transmission regions 43 have a large spread in the horizontal direction, the radio waves reach the entire region R. Hereinafter, specific descriptions will be given. Regarding the region R, a virtual diagonal line C is drawn from an upper left corner toward a lower right corner, and in the region R, a left side of the diagonal line C is a first region R1 and a right side is a second region R2. In this case, in Fig. 13, the radio waves that have passed through the openings of the first glass plate 1 reach the first region R1 but do not reach the region away from the diagonal line C in the second region R2. On the other hand, in Fig. 14, it is confirmed that, although the radio wave intensity decreases slightly, the radio waves widely reach not only the first region R1 but also the second region R2, and the radio waves reach the entire region R.

In this way, in the glass body 100 in the present embodiment, the plurality of radio wave passage sections 43A through which radio waves are allowed to pass and which is spaced apart from each other is provided in the radio wave transmission region 43, and the conductive film section 43B is provided between the radio wave passage sections 43A adjacent to each other. That is, even in the radio wave transmission region 43, the conductive film section 43B is provided to enhance the heat insulating performance, and the plurality of radio wave passage sections 43A is provided to enhance the radio wave transmissivity.

In addition, the radio wave transmission region 43 is configured with a radio wave diffusion structure in which some of the radio waves that have passed through the plurality of radio wave passage sections 43A are diffracted and overlap each other in a space facing the conductive film section 43B. That is, the radio waves that have passed through the radio wave passage section 43A not only travel straight but also are diffracted, and the radio wave diffraction components overlap each other in the space facing the conductive film section 43B. Accordingly, in the space facing the conductive film section 43B, where the radio wave intensity is likely to be weakened, the radio wave intensity is capable of being enhanced, and the radio wave reception area is capable of being increased. Thus, the glass body 100 having radio wave transmissivity, which is capable of expanding the reception area, is obtained.

### [Other embodiments]

(1) The radio wave transmission region 43 in the above-described embodiment is not limited to a rectangular shape and may be, for example, a circular shape, an oval shape, an elliptical shape, a cross shape, or the like. Even in this case, the maximum length L of the line segment passing through the center of the radio wave passage section 43A is preferably 10 mm or more, and preferably 4 times or less of the wavelength.
(2) As illustrated in Fig. 15, the radio wave passage section 43A of the radio wave transmission region 43 may be formed in an annular shape. Even in this case, it is preferable that the radio wave passage section 43A is subjected to the patterning processing through which the plurality of fine wires 43Ab is concentrically formed at equal intervals. The various dimension ranges of the radio wave transmission region 43 are the same as those of the above-described embodiment.
(3) The Low-E film 41 may be removed over the entire region of the radio wave passage section 43A by omitting the plurality of islands 43Aa formed on the radio wave passage section 43A in the above-described embodiment. In addition, the shape of the islands 43Aa is not limited to a rectangular shape, and may be, for example, a circular shape, an oval shape, an elliptical shape, or the like.
(4) In the radio wave transmission region 43, it is not necessary to remove the Low-E film 41 to expose the glass plate, and it is sufficient as long as at least the metal layer having silver as a main component is removed.
(5) In the multilayer glass in the second embodiment, a heat blocking film may be disposed on the second surface 12 of the first glass plate 1 and the Low-E film 41 may be disposed on the third surface 13 of the second glass plate 2. The heat blocking film is preferably a multilayer film including a layer having titanium nitride as a main component. A suitable example of the metal nitride layer includes a titanium nitride layer. The film thickness of the heat blocking film is appropriately selected depending on the types of the films to be laminated, but is usually 5 to 100 nm, and preferably 10 to 50 nm. The heat blocking film is constituted by, for example, a heat ray absorbing film. If the heat blocking film is the heat ray absorbing film, infrared rays are capable of being absorbed by the heat blocking film. Thus, the heat blocking property is capable of being improved in the glass body 100.

### Industrial Applicability

The present invention is capable of being used for a glass body as a window glass of a building or a window glass of a moving body such as an automobile, an aircraft, a ship, or a train.

### Description of Reference Numerals

1: first glass plate
2: second glass plate
3: void layer
5: spacer
11: first surface
12: second surface
13: third surface
14: fourth surface
41: Low-E film (conductive film)
42: radio wave non-transmission region
43: radio wave transmission region
43A: radio wave passage section
43Aa: island
43Ab: fine wire
43B: conductive film section
100: glass body
L: maximum length of line segment passing through center
W: width of conductive film section

## Claims

1. A glass body, comprising:
a first glass plate configured to have a first surface and a second surface on an opposite side to the first surface,
wherein at least one plate surface of the first surface and the second surface includes a radio wave transmission region through which radio waves having a wavelength having linearity are allowed to be transmitted,
the radio wave transmission region includes a plurality of radio wave passage sections through which the radio waves are allowed to pass and which is spaced apart from each other, and a conductive film section in which a conductive film having a blocking property for the radio waves is formed between the radio wave passage sections adjacent to each other, and
the radio wave transmission region is configured with a radio wave diffusion structure in which some of the radio waves that have passed through the plurality of radio wave passage sections are diffracted and overlap each other in a space facing the conductive film section.

2. The glass body according to claim 1,
wherein a maximum length of a line segment passing through a center of the radio wave passage section is four times or less the wavelength.

3. The glass body according to claim 1 or 2,
wherein a width of the conductive film section, which is a shortest distance between the radio wave passage sections adjacent to each other, is 10 mm or more and 500 mm or less.

4. The glass body according to any one of claims 1 to 3,
wherein the at least one plate surface includes a radio wave non-transmission region in which the conductive film is formed around the radio wave transmission region, and
the radio wave passage section is formed with a pattern having a plurality of islands covered with the conductive films spaced apart from each other.

5. The glass body according to claim 4,
wherein a fine wire having a wire width of 1 µm or more and 100 µm or less is formed between the islands adjacent to each other, and an interval between the fine wires adjacent to each other is 200 µm or more and 10 mm or less.

6. The glass body according to claim 4 or 5,
wherein the islands are rectangular.

7. The glass body according to any one of claims 1 to 6,
wherein the wavelength is 10 mm or more and 428 mm or less.

8. The glass body according to any one of claims 1 to 7,
wherein the conductive film is a Low-E film.

9. The glass body according to claim 8, further comprising:
a second glass plate configured to have a third surface facing the second surface and a fourth surface on an opposite side to the third surface; and
a spacer configured to be in contact with the second surface and the third surface and to form a void layer between the first glass plate and the second glass plate,
wherein the radio wave transmission region is formed on the second surface or the third surface.
